(19) Europäisches Patentamt
European Patent Office
Office européen des brevets

(11) EP 0 539 969 B1

## (12) EUROPEAN PATENT SPECIFICATION

(45) Date of publication and mention
of the grant of the patent:
**15.10.1997 Bulletin 1997/42**

(51) Int Cl.6: **H01L 41/09**

(21) Application number: **92118473.5**

(22) Date of filing: **29.10.1992**

(54) **Ultrasonic motor**

Ultraschallmotor

Moteur à ultrasons

(84) Designated Contracting States:
**DE FR GB**

(30) Priority: **31.10.1991 JP 285922/91**

(43) Date of publication of application:
**05.05.1993 Bulletin 1993/18**

(73) Proprietor: **MATSUSHITA ELECTRIC INDUSTRIAL CO., LTD.**
**Kadoma-shi, Osaka-fu, 571 (JP)**

(72) Inventors:
• **Nishikura, Takahiro**
**Ikoma-shi, Nara-ken (JP)**
• **Takeda, Katsu**
**Osaka-shi, Osaka-fu (JP)**

• **Sumihara, Masanori**
**Higashiosaka-shi, Osaka-fu (JP)**
• **Kawasaki, Osamu**
**Tsuzuki-gun, Kyoto-fu (JP)**

(74) Representative: **Eisenführ, Speiser & Partner**
**Martinistrasse 24**
**28195 Bremen (DE)**

(56) References cited:
**EP-A- 0 258 449        EP-A- 0 325 062**

• **JAPANESE JOURNAL OF APPLIED PHYSICS, SUPPLEMENTS, vol. 29, no. 1, 1990, Tokyo, JP, pp. 197-199; M. SUGIHARA et al.: 'Quick Responce in Rotation of Ultrasonic Motor'**

**Description**

BACKGROUND OF THE INVENTION

The present invention generally relates to the structures of a moving member and a vibrating member of an ultrasonic motor for generating a driving force with the use of vibrations excited by a piezoelectric member.

A conventional ultrasonic motor will be described hereinafter in detail with reference to the drawings.

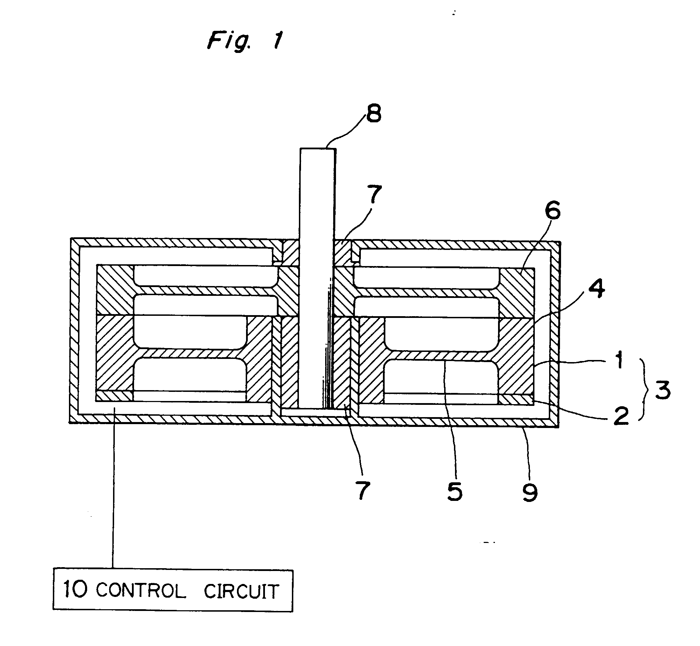

Fig. 1 is a sectional view of the conventional ultrasonic motor. Referring now to Fig. 1, reference numeral 1 designates a ring-shaped elastic anchor member made of a material such as metal, ceramic or the like, reference numeral 2 designates a ring-shaped piezoelectric member, reference numeral 3 designates a stator formed by the elastic anchor member 1 and the piezoelectric member 2 being adhered to each other, reference numeral 4 designates a projection portion of the elastic member 1, reference numeral 5 designates a disc-shaped support member consisting of a thin plate, and reference numeral 6 designates a rotor of the same structure as the stator 4. Reference numeral 7 designates two bearings, with a rotary shaft 8 being provided through the respective central holes of the bearings 7. Reference numeral 9 designates a housing. Reference numeral 10 designates a control circuit for controlling the stator.

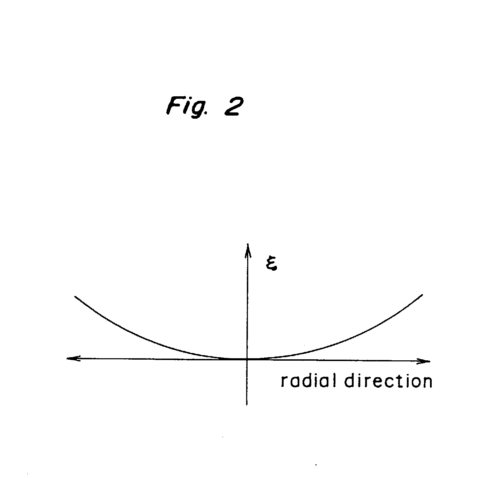

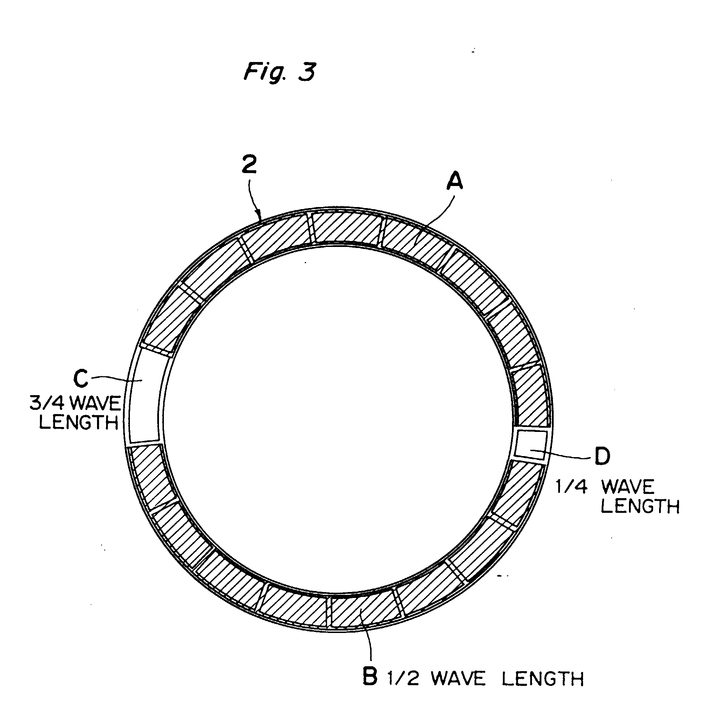

When an alternating voltage is applied to the piezoelectric member 2 from the control circuit 10 in Fig. 1, standing waves having a vibration displacement distribution in a radial direction as shown in Fig. 2, and a tertiary bending mode or more in the peripheral direction are excited in the stator 3. The disc-shaped support member 5 is provided near the neutral shaft of the stator 3 where the vibration loss is small. The stator is thus fixed to the housing at the inner peripheral portion of the stator. When two standing waves having a given phase difference are excited in the ring-shaped stator 3, bending vibrations excite progressive waves along the periphery of the stator 3. The rotor 6 provided in contact with the projection portion 4 of the stator 3 is driven by the frictional force created by the progressive waves. The rotary shaft 8 is mechanically coupled to the rotor 6. Because the shaft 8 is retained by two bearings 7, the rotary shaft 8 rotates. Fig. 3 shows one example of the driving electrode of the piezoelectric member 2 of the ultrasonic motor of Fig. 1. Fig. 3 shows the electrode which facilitates the excitation of nine elastice waves in the peripheral direction. Reference characters A and B respectively designate groups of electrodes each corresponding to one-half of a wavelength, reference character C designates an electrode corresponding to three-quarters of a wavelength, and reference character D designates an electrode corresponding to one-quarter of a wavelength. The electrodes C and D cause a phase difference of one-quarter of a wavelength (= ninety degrees) between the electrode groups A and B. Adjacent electrodes within the groups A and B are polarized opposite to each other in their direction of thickness. The face at which the piezoelectric member 2 is bonded to the elastic member is opposite to the face shown in Fig. 3, with the electrode thereat being a contiguous electrode. During operation, the electrode groups A and B are respectively short-circuited before use thereof as shown by the oblique lines in Fig. 3.

The operation of the conventional ultrasonic motor will be described hereinafter. Voltages V1 and V2 represented by equations (1) and (2) are applied, respectively, to the groups of electrodes A and B of the piezoelectric member 2 of the ultrasonic motor.

$$(1) \qquad V_1 = V_0 \text{ x sin } (\omega t)$$

$$(2) \qquad V_2 = V_0 \text{ x cos } (\omega t)$$

wherein V0 is an instantaneous value of the voltage, $\omega$ is an angular frequency, t is time.

Thus, progressive waves of the bending vibrations represented by equation (3) are excited to propagate in the circumferential direction of the stator 3.

$$(3) \qquad \xi = \xi_0 \text{ x } (\cos(\omega t) \text{ x cos } (kx)) + \sin (\omega t) \text{ x sin } (kx)$$

$$= \xi_0 \text{ x cos } (\omega t - kx)$$

where $\xi$ is an amplitude of the bending vibrations, $\xi_0$ is an instantaneous value of the bending vibrations, k is the ratio $2\pi/\lambda$, $\lambda$ is a wavelength, x is a position.

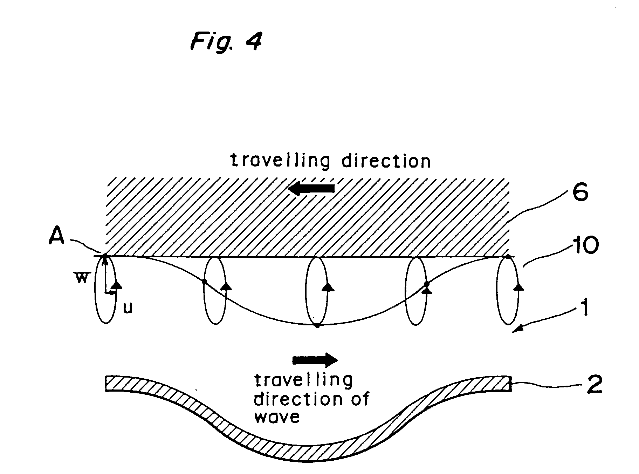

Fig. 4 shows the movement of an elliptic track 10 defined by a vertical axis 2w and a lateral axis 2u to be obtained by the excitation of the progressive wave at a point A on the surface of the stator 3. The rotor 6 in contact with the stator 3 is moved at a speed v according to equation (4) in a direction opposite to the direction of the progressive wave due to a frictional force.

$$(4) \qquad V = \omega \times u$$

In the conventional ultrasonic motor, the disc-shaped support member 5 has to be connected with the projection 4 of the stator 3 or the same have to be fabricated at the same time by a contemporaneous working of stock material. An unevenness in the vibration distribution is likely to arise due to inequalities and so on in the mechanical strength at the connection between the disc-shaped portion 5 and projection 4. In the contemporaneous working operation, mass productivity is low due to the required working precision as both faces of the stator 3 have to be worked. Because the projection portion 4 has the same diameter as the stator 3, the kinetic energy of the stator is small and the vibrations of the stator are attenuated by the pressure exerted by the rotor as the motor is made smaller. Therefore, the vibration displacement distribution shown in Fig. 2 cannot be realized and the output is considerably lowered to the degree to which the motor is miniaturized.

From EP-A-0 325 062 defining the closest prior art from which the invention proceeds, it is known an ultrasonic motor comprising a vibrator supported by a support member, said vibrator including a disk-shaped elastic member having a central hole therethrough, a disk-shaped piezoelectric member fixed to said disk-shaped elastic member on one side surface of the elasic member at which the vibrator is supported by the support member, and a projection member extending from said disk-shaped elastic member at the other side surface thereof, said projection member being disposed along a circle having a diameter larger than that of the central hole of said disk-shaped elastic member and smaller than the outer diameter of said disk-shaped elastic member such that said projection member is located radially outwardly of an inner peripheral portion of the elastic member and radially inwardly of an outer peripheral portion of the elastic member, a shaft extending through the central hole of said elastic member, a moving member mechanically coupled to said shaft and contacting the projection member of said vibrator, and urging means for biasing said shaft in a direction which forces the moving member against the projection member of said vibrator.

A similar ultrasonic motor is described in Japn. J. Appl. Phys., Vol. 29 (1990) Supplement 29-1, pages 197-199; M. Sugihara et al.: "Quick Response in Rotation of Ultrasonic Motor", wherein the projection member is located radially inwardly of an outer peripheral portion of the elastic member.

SUMMARY OF THE INVENTION

Accordingly, the present invention has been developed to substantially eliminate the above-discussed drawbacks inherent in the prior art, and has as its essential object to provide an improved ultrasonic motor.

An important object of the present invention is to provide an improved ultrasonic motor wherein the vibrator can be made easier to vibrate, the reduction of the resonance impedance and the vibration displacement amount can be enlarged, so that an ultrasonic motor of higher efficiency can be obtained.

In order to achieve the above object, according to the present invention, there is provided an ultrasonic motor comprising a vibrator supported by a support member, said vibrator including a disk-shaped elastic member having a central hole therethrough, a disk-shaped piezoelectric member fixed to said disk-shaped elastic member on one side surface of the elasic member at which the vibrator is supported by the support member, and a projection member extending from said disk-shaped elastic member at the other side surface thereof, said projection member being disposed along a circle having a diameter larger than that of the central hole of said disk-shaped elastic member and equal or smaller than the outer diameter of said disk-shaped elastic member such that said projection member is located radially outwardly of an inner peripheral portion of the elastic member, a shaft extending through the central hole of said elastic member, a moving member mechanically coupled to said shaft and contacting the projection member of said vibrator, and urging means for biasing said shaft in a direction which forces the moving member against the projection member of said vibrator, wherein said disk-shaped elastic member has a recess in said other side thereof at said inner peripheral portion such that a portion of the disk-shaped elastic member located radially inwardly of said projection member is thinner than the remaining portion of the disk-shaped elastic member, characterized in that said projection member is provided on said remaining portion of the disk-shaped elastic member, and said disk-shaped piezoelectric member is fixed to said remaining portion of the disk-shaped elastic member only.

Further advantageous embodiments are defined in the sub-claims.

In a preferred embodiment, by fixing the inner peripheral portion of the vibrator so that the amplitude of the vibrations at the inner peripheral portion are sufficiently small, the positional stability of the stator is improved and the resonance impedance is reduced, thus making it possible to realize a stable supersonic motor high in efficiency.

BRIEF DESCRIPTION OF THE DRAWINGS

These and other objects and features of the present invention will become apparent from the following description of the preferred embodiment thereof made with reference to the accompanying drawings, in which:

Fig. 1      is a sectional view of a conventional ultrasonic motor;

Fig. 2      is a view showing the primary vibration displacement distribution in a radial direction of the ultrasonic motor;

Fig. 3      is a diagram of a piezoelectric member used in the ultrasonic motor;

Fig. 4      is an explanatory diagram showing the operation principle of the ultrasonic motor;

Fig. 5      is a sectional view of a preferred embodiment of an ultrasonic motor according to the present invention;

Fig. 6      is a perspective view of a vibration member of the preferred embodiment of an ultrasonic motor according to the present invention;

Fig. 7      is a sectional view of an ultrasonic motor constituting a modified form of the preferred embodiment of the present invention; and

Fig. 8      is a schematic diagram of another piezoelectric member which can be used in each embodiment of the present invention.

## DESCRIPTION OF THE PREFERRED EMBODIMENT

Before the description of the present invention proceeds, it is to be noted that like parts are designed by like reference numerals through the accompanying drawings.

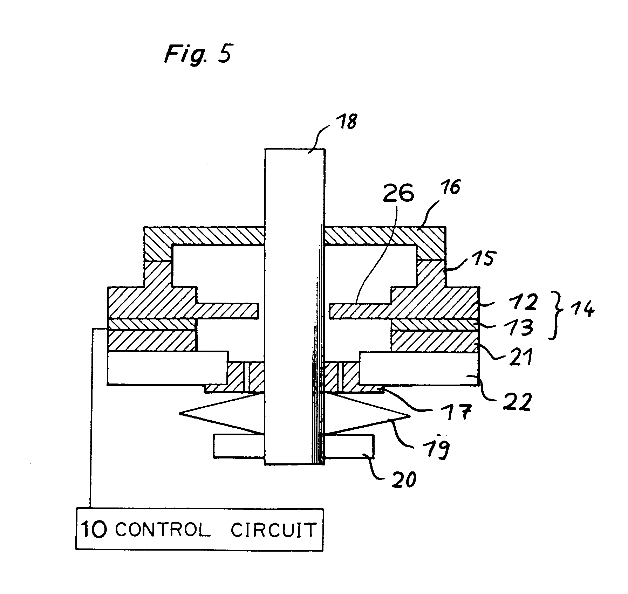

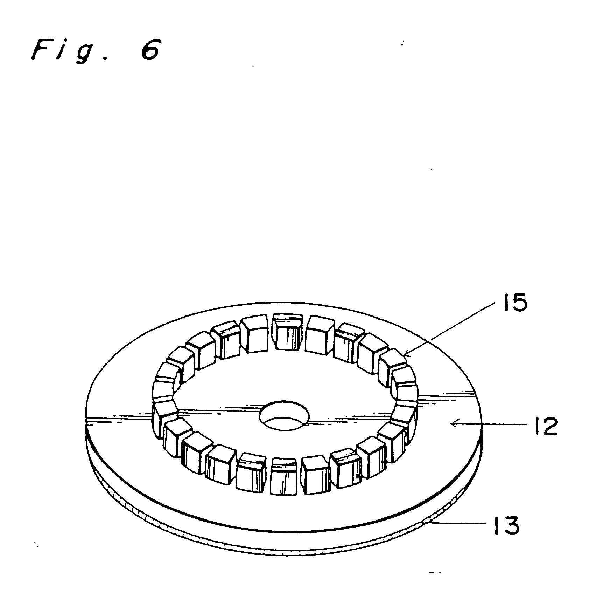

In Figs. 5 and 6, reference numeral 12 designates an elastic member, reference numeral 13 designates a piezoelectric member, reference numeral 14 designates a vibrator composed of the elastic member 12 and the piezoelectric member 13, reference numeral 15 designates a projection member provided on the elastic member 12, reference numeral 16 designates a moving member, reference numeral 17 designates a bearing, reference numeral 18 designates a rotary shaft, reference numeral 19 designates a spring for bringing the moving member 16 and the vibrator 14 into pressure contact with each other, reference numeral 20 designates a spring hold tap (spring support), reference numeral 21 designates a support member for retaining the vibrator 14, and reference numeral 22 designates a support stand for retaining the vibrator 14.

As can be seen from Fig. 5, the vibrator 14 has a thin portion 26 formed by a recess in the face opposite to the face at which the piezoelectric member 13 is bonded to the elastic member 12 and located at the inner peripheral portion of the elastic member. The piezoelectric member 13 is adhered to the thick portion of the elastic member 12 of the vibrator 14. The thin portion 26 which has a relatively low bending rigidity, is formed as part of the vibrator 14 so that the vibrator 14 is easy to vibrate, the resonance impedance is low, and the vibration displacement is large. Therefore, an ultrasonic motor of higher efficiency can be obtained. Only one side of stock has to be worked to form vibrator 14 with the planar surface of the other side being used as a reference. The face at which the elastic member 12 of the vibrator 14 is bonded to the piezoelectric member 13 is the planar surface, whereby mass production is facilitated so that lower manufacturing costs are realized.

The operation of the ultrasonic motor will next be described.

The vibrator 14 comprises a disc-shaped member supporting a projection member 15 at a position spaced from the outer and inner peripheral portions thereof. The vibrator 14 is provided on the support stand 22 through a support member 21 made of a buffer material such as felt or the like so that vibrating interference are not caused.

The pressure between the vibrating member 14 and the moving member 16 is set by the pressure spring 19 and the spring hold tap 20.

When an alternating current voltage having a phase difference of ninety degrees is supplied by the control circuit 10 to groups of driving electrodes A, B formed on the piezoelectric member 13, primary elastic progressive waves in the radial direction, and tertiary elastic progressive waves or more in the peripheral direction are excited in the vibrator 14. The moving member 16 is mechanically coupled to the rotary shaft 18 and the rotary shaft 18 is supported by the bearing 17 provided on the support stand 22.

Rotation of the rotary shaft 18 is drawn off outside as output torque.

According to the present invention, the energy of the vibrations are not lowered if the size of the vibrator 14 is made smaller so long as the thickness thereof is maintained, whereby even a small supersonic motor capable of producing a large output can be realized. Because the projection member 15 is in pressure contact with the moving member 16 at a position other than the maximum displacement position (maximum outside diameter) of the vibration displacement distribution, i.e. as spaced from the outer and inner peripheral portions of the vibrator 14, the vibrations of the vibrator 14 are hardly influenced due to positional inequality and external load variations. Therefore, the motor characteristics are hardly influenced by the vibrations in the load, so that a motor which exhibits superior reliability in its characteristics can be obtained.

Assume that a primary vibration mode in the diametrical direction is an overhung beam fixed at one end. The overhung beam becomes deformable in proportion with the square of the radius when the plate thickness is constant. Thus, if the projection member 15 were provided at the outermost portion of the vibrator 14, the displacement distribution of the vibrator 14 would likely change with a small force, so that the motor characteristics would suddenly drop.

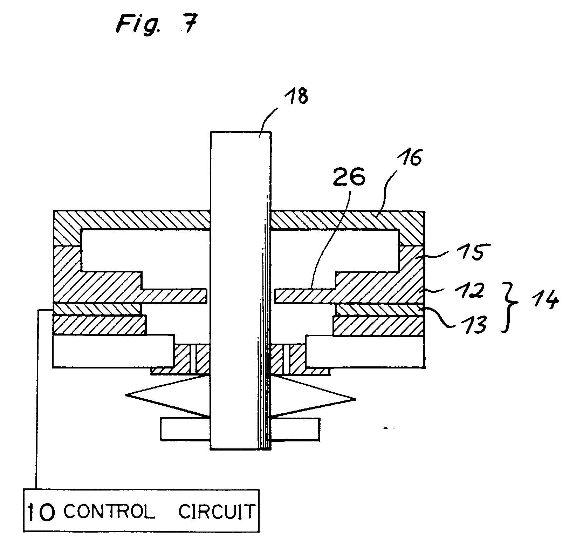

Alternatively, the projection member 15 may be provided on the outer peripheral portion of the vibrator 14 as shown in Fig. 7. The vibration displacement is harder to change than in the conventional supersonic wave motor in which the projection member is provided over the entire periphery of the vibrator. Therefore, a supersonic motor of higher torque and stability can be realized.

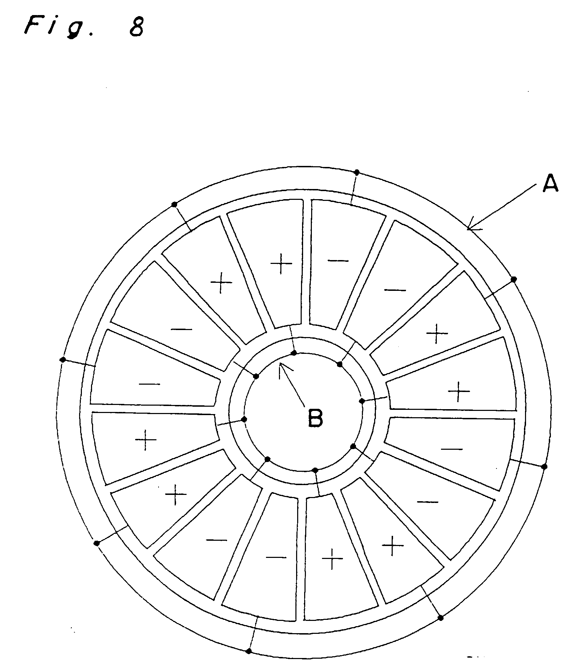

The electrode structure of the piezoelectric member 13 of the above-described embodiment is not restricted to that shown in Fig. 2. Electrode groups A and B may be arranged in the circumferential direction as shown in, for example, Fig. 8. In the case of Fig. 8, the non-driving portion of one wavelength used in Fig. 2 is omitted. Thus, the embodiment of Fig. 8 has a higher driving efficiency. As the polarities are arranged alternately, a discontinuity in the balance effected by the A, B electrodes due to an unequal application of the load can be made small, and an ultrasonic motor capable of a very stable operation can be obtained.

In the vibrator for producing the primary elastic waves in the radial direction and the tertiary elastic waves or more in the peripheral direction, the projection member is located at a position radially outwardly of the inner peripheral portion and radially inwardly of the outer peripheral portion, the inner peripheral portion being secured to the stationary shaft or the like. A reduction in the energy of the vibrations and the excitation of other vibration modes are prevented, and an ultrasonic motor of high efficiency can be obtained even at a low voltage due to the low resonance impedance. The motor which has superior characteristics is obtained as the excitation of other vibrating modes by variations in the load is suppressed.

Also, the ultrasonic motor can operate at a high speed and with high efficiency when the thinner portion of the elastic member is provided. Because this thinner portion is formed by forming a recess in a single face of the vibrator, the working required facilitates mass production. Further, because the thinner portion of the elastic member of the vibrator has low rigidity, a low resonance impedance and large vibration displacement can be effected.

## Claims

1. An ultrasonic motor comprising:

    a vibrator (14) supported by a support member (21), said vibrator (14) including a disk-shaped elastic member (12) having a central hole therethrough, a disk-shaped piezoelectric member (13) fixed to said disk-shaped elastic member (12) on one side surface of the elasic member (12) at which the vibrator (14) is supported by the support member (21), and a projection member (15) extending from said disk-shaped elastic member (12) at the other side surface thereof, said projection member (15) being disposed along a circle having a diameter larger than that of the central hole of said disk-shaped elastic member (12) and equal or smaller than the outer diameter of said disk-shaped elastic member (12) such that said projection member (15) is located radially outwardly of an inner peripheral portion of the elastic member;
    a shaft (18) extending through the central hole of said elastic member (12); a moving member (16) mechanically coupled to said shaft (18) and contacting the projection member (15) of said vibrator (14); and
    urging means (19, 20) for biasing said shaft (18) in a direction which forces the moving member (16) against the projection member (15) of said vibrator (14); wherein said disk-shaped elastic member (12) has a recess in said other side thereof at said inner peripheral portion such that a portion (26) of the disk-shaped elastic member (12) located radially inwardly of said projection member (15) is thinner than the remaining portion of the disk-shaped elastic member (12);

    characterized in that

    said projection member (15) is provided on said remaining portion of the disk-shaped elastic member (12); and said disk-shaped piezoelectric member (13) is fixed to said remaining portion of the disk-shaped elastic member (12) only.

2. An ultrasonic motor as claimed in claim 1, wherein said projection member (15) is located radially inwardly of an outer periperhal portion of said elastic member (12) and said thinner portion (26) is thinner than the portion of said elastic member (12) located radially outwardly of said projection member (15).

3. An ultrasonic motor as claimed in claim 1 wherein the projection member (15) is disposed on the outer peripheral portion of the elastic member (12).

4. An ultrasonic motor as claimed in anyone of claims 1 to 3, wherein said projection member comprises a plurality of projections (15) spaced from one another.

5. An ultrasonic motor as claimed in anyone of claims 1 to 4, wherein said support member (21) is disposed on a surface of a support body (22) having a central hole therethrough, said shaft (18) extending through said central hole of said support body (22).

6. An ultrasonic motor as claimed in claim 5, further comprising a bearing (17) fixed relative to said support body (22) and located in the central hole thereof, said bearing (17) rotatably supporting said shaft (18).

7. An ultrasonic motor as claimed in claim 5 or 6, wherein said urging means (19, 20) includes a spring (19) and a spring support (20) extending from an end of said shaft (18), said spring (19) being interposed between said support body (22) and said spring support (20) so as to exert said biasing force in the axial direction of said shaft (18) via said spring support (20).

**Patentansprüche**

1. Ultraschallmotor enthaltend:

   einen durch ein Trageteil (21) gehaltenen Vibrator (14), der ein mit einem zentralen Loch versehenes scheibenförmiges elastisches Teil (12), ein auf der seitlichen Fläche des elastischen Teils (12), auf der der Vibrator (14) durch das Trageteil (21) gehalten wird, befestigtes piezoelektrisches Teil (13) und ein sich von der anderen seitlichen Fläche des scheibenförmigen elastischen Teils (12) erstreckendes Ansatzteil (15) enthält, wobei das Ansatzteil (15) entlang eines Kreises angeordnet ist, dessen Durchmesser größer als das zentrale Loch des scheibenförmigen elastischen Teils (12) und gleich oder kleiner als der äußere Durchmesser des scheibenförmigen elastischen Teils (12) ist, in der Weise, daß das Ansatzteil (15) radial außen liegend von einem inneren peripheren Abschnitt des elastischen Teils angeordnet ist;
   eine sich durch das zentrale Loch des elastischen Teils (12) erstreckende Welle (18);
   ein mechanisch an die Welle (18) gekoppeltes und das Ansatzteil (15) des Vibrators (14) berührendes Drehteil (16); und
   Vorspannmittel (19, 20), um die Welle (18) in eine Richtung vorzuspannen, welche das Drehteil (16) gegen das Ansatzteil (15) des Vibrators (14) bringt;

   wobei das scheibenförmige elastische Teil (12) einen auf der anderen Seite an dem inneren peripheren Abschnitt liegenden Absatz aufweist, so daß ein radial von dem Ansatzteil (15) nach innen gerichtet liegender Abschnitt (26) des scheibenförmigen elastischen Teils (12) dünner ist als der verbleibende Abschnitt des scheibenförmigen elastischen Teils (12);
   dadurch gekennzeichnet, daß

   das Ansatzteil (15) in dem verbleibenden Abschnitt des scheibenförmigen elastischen Teils (12) vorgesehen ist; und
   daß das scheibenförmige piezoelektrische Teil (13) lediglich mit dem verbleibenden Abschnitt des scheibenförmigen elastischen Teils (12) verbunden ist.

2. Ultraschallmotor nach Anspruch 1,
   dadurch gekennzeichnet, daß das Ansatzteil (15) von einem äußeren peripheren Abschnitt des elastischen Teils (12) radial nach innen gerichtet angeordnet ist und der dünnere Abschnitt (26) dünner ist als der Abschnitt des elastischen Teils (12), der radial außen liegend von dem Ansatzteil (15) angeordnet ist.

3. Ultraschallmotor nach Anspruch 1,
   dadurch gekennzeichnet, daß das Ansatzteil (15) auf dem äußeren peripheren Abschnitt des elastischen Teils (12) vorgesehen ist.

4. Ultraschallmotor nach einem der Ansprüche 1 bis 3,

dadurch gekennzeichnet, daß das Ansatzteil mehrere voneinander beabstandete Ansätze (15) enthält.

5. Ultraschallmotor nach einem der Ansprüche 1 bis 4,
dadurch gekennzeichnet, daß das Trageteil (21) auf einer Oberfläche eines mit einem zentralen Loch versehenen Tragekörpers (22) vorgesehen ist, wobei sich die Welle (18) durch das zentrale Loch des Tragekörpers (22) erstreckt.

6. Ultraschallmotor nach Anspruch 5,
dadurch gekennzeichnet, daß dieser weiterhin ein relativ zu dem Tragekörper (22) befestigtes und in dessen zentralem Loch angeordnetes Lager (17) enthält, wobei das Lager (17) die Welle (18) drehbar lagert.

7. Ultraschallmotor nach Anspruch 5 oder 6,
dadurch gekennzeichnet, daß die Vorspannmittel (19, 20) eine Feder (19) und eine sich von einem Ende der Welle (18) erstreckende Federhalterung (20) umfassen, wobei die Feder (19) zwischen dem Tragekörper (22) und der Federhalterung (20) eingefügt ist, um die Vorspannungskraft mittels der Federhalterung (20) in axialer Richtung der Welle (18) auszuüben.

**Revendications**

1. Moteur à ultrasons comprenant ;

   un vibrateur (14) supporté par un élément de support (21), ledit vibrateur (14) comprenant un élément élastique en forme de disque (12) ayant un trou central dans celui-ci, un élément piézo-électrique en forme de disque (13) fixé audit élément élastique en forme de disque (12) sur une surface latérale dudit élément élastique (12) au niveau duquel le vibrateur (14) est supporté par l'élément de support (21) et un élément en saillie (15) s'étendant à partir dudit élément élastique en forme de disque (12) jusqu'à son autre surface latérale, ledit élément en saillie (15) étant disposé le long d'un cercle ayant un diamètre plus grand que celui du trou central dudit élément élastique en forme de disque (12) et égal ou inférieur au diamètre extérieur dudit élément élastique en forme de disque (12) d'une manière telle que ledit élément en saillie (15) est placé radialement à l'extérieur par rapport à la partie périphérique interne de l'élément élastique ;
   un arbre (18) s'étendant dans le trou central dudit élément élastique (12) ;
   un élément mobile (16) couplé mécaniquement audit arbre (18) et contactant l'élément en saillie (15) dudit vibrateur (14) ; et
   un moyen de poussée (19, 20) pour solliciter ledit arbre (18) dans une direction qui force l'élément mobile (16) contre l'élément en saillie (15) dudit vibrateur (14) ;

   dans lequel ledit élément élastique en forme de disque (12) a un évidement dans son autre dite surface latérale au niveau de la partie périphérique interne d'une manière telle qu'une partie (26) de l'élément élastique en forme de disque (12) placé radialement à l'intérieur par rapport audit élément en saillie (15) est plus mince que la partie restante de l'élément élastique en forme de disque (12) ;
       caractérisé en ce que

   ledit élément en saillie (15) est prévu sur ladite partie restante dudit élément élastique en forme de disque (12) ; et
   ledit élément piézo-électrique en forme de disque (13) est seulement fixé à ladite partie restante dudit élément élastique en forme de disque (12).

2. Moteur à ultrasons selon la revendication 1, dans lequel ledit élément en saillie (15) est placé radialement à l'intérieur par rapport à la partie périphérique externe dudit élément élastique (12) et ladite partie plus mince (26) est plus mince que la partie dudit élément élastique (12) placé radialement à l'intérieur par rapport audit élément en saillie (15).

3. Moteur à ultrasons selon la revendication 1, dans lequel ledit élément en saillie (15) est disposé sur la partie périphérique externe de l'élément élastique (12).

4. Moteur à ultrasons selon l'une quelconque des revendications 1 à 3, dans lequel ledit élément en saillie comprend une pluralité de saillies (15) espacées les unes des autres.

**5.** Moteur à ultrasons selon l'une quelconque des revendications 1 à 4, dans lequel ledit élément de support (21) est disposé sur une surface d'un corps de support (22) ayant un trou central dans celui-ci, ledit arbre (18) s'étendant dans le trou central dudit corps de support (22).

**6.** Moteur à ultrasons selon la revendication 5, comprenant de plus un palier (17) fixé par rapport audit corps de support (22) et placé dans son trou central, ledit palier (17) supportant à tourner ledit arbre (18).

**7.** Moteur à ultrasons selon la revendication 5 ou 6, dans lequel ledit moyen de poussée (19, 20) comprend un ressort (19) et un support de ressort (20) s'étendant à partir d'une extrémité dudit arbre (18), ledit ressort (19) étant interposé entre ledit corps de support (22) et ledit support de ressort (20) de façon à exercer ladite force de sollicitation dans la direction axiale dudit arbre (18) via ledit support de ressort (2C).

*Fig. 1*

10 CONTROL CIRCUIT

# Fig. 2

*Fig. 3*

2

A

C

3/4 WAVE
LENGTH

D

1/4 WAVE
LENGTH

B 1/2 WAVE LENGTH

## Fig. 4

*Fig. 5*

10 CONTROL CIRCUIT

Fig. 6

Fig. 7

Fig. 8